# EUROPÄISCHE PATENTSCHRIFT

(11) **EP 1 134 594 B1**
(45) Veröffentlichungstag und Bekanntmachung des Hinweises auf die Patenterteilung: **20.11.2013**
(21) Anmeldenummer: 01102343.9
(22) Anmeldetag: 01.02.2001
(51) Int. Cl.: G01S 17/46

(54) **Verfahren und Vorrichtung zur Erfassung von Kantenbereichen von Objekten**
Method and device for detecting object edge areas
Procédé et dispositif de détection de zones de carré d'objet

(30) Priorität: 13.03.2000 DE 10012138
(43) Veröffentlichungstag der Anmeldung: 19.09.2001
(73) Patentinhaber: SICK AG, 79183 Waldkirch (DE)
(72) Erfinder: Alt, Gerhard, 79350 Sexau (DE); Bürger, Jürgen, 79331 Nimburg (DE); Nübling, Ralf Ulrich, 79211 Denzlingen (DE)
(74) Vertreter: Manitz, Finsterwald & Partner GbR

(56) Entgegenhaltungen:
- WO-A1-85/05206
- DE-A1- 3 919 917
- DE-A1- 19 532 767
- GB-A- 2 258 041
- US-A- 4 659 922
- US-A- 4 666 303
- US-A- 4 697 921
- US-A- 4 755 662
- US-A- 4 791 759
- US-A- 5 936 229

## Beschreibung

Die Erfindung betrifft ein Verfahren ausgebildet zur Erfassung von Kantenbereichen von Objekten, insbesondere von sich überlappenden Zeitungen gemäß Anspruch 1. Weiterhin ist die Erfindung auf eine Vorrichtung zur Durchführung eines solchen Verfahrens gemäß dem Anspruch 10 gerichtet.

Ein derartiges Verfahren und eine derartige Vorrichtung kommen beispielsweise bei der Zählung von Zeitungen zum Einsatz, die gegenseitig überlappend, d.h. "schuppenartig" auf einem Förderband angeordnet sind. Durch Erfassung der Anzahl der durch die Überlappung gebildeten Kanten der Zeitungen erfolgt eine Zählung der Zeitungen. In der Praxis ist für eine derartige Vorrichtung auch der Begriff "Schuppenzähler" bekannt.

Bekannt sind Verfahren und Vorrichtungen zur Zählung von Zeitungen, die nach dem Prinzip der Streulichtanalyse arbeiten. Hierbei wird durch diffuse Remission von Streulicht an Zeitungen ein spezifisches Lichtverteilungsmuster auf oberhalb der Zeitungen angeordneten Lichtempfangseinheiten erhalten. Trifft das ausgesandte Licht auf eine Kante, so ändert sich die auf die Empfangseinheiten auftreffende Lichtverteilung, so daß auf das Auftreten von Kantenbereichen rückgeschlossen werden kann. Nachteilig an den bekannten Verfahren und Vorrichtungen ist, daß insbesondere bei rauhen oder welligen Oberflächen das durch die Streulichtanalyse erhaltene Lichtverteilungsmuster oftmals keine eindeutige Bestimmung von Kantenbereichen mehr zuläßt. Eine unterschiedliche Ausrichtung der sich überlappenden Zeitungen kann diesen Effekt noch verstärken.

Ein Verfahren und eine Vorrichtung der eingangs genannten Art sind aus der WO 85/05206 A bekannt. Gemäß dem beschriebenen Verfahren werden zwei Lichtsignale so aus entgegengesetzten Richtungen in den Überwachungsbereich ausgesandt, dass sie von den sich bewegenden Objekten zu einem Empfänger reflektiert werden. Die Lichtsignale werden auf dem Empfänger überlagert und besitzen unterschiedliche Eigenschaften, beispielsweise unterschiedliche Frequenzen, unterschiedliche Phasen oder eine unterschiedliche Polarisation, sodass von dem Empfänger das Auftreffen beider reflektierter Lichtsignale vom Auftreffen nur eines reflektierten Lichtsignals unterschieden werden kann. Zur Erfassung der Kantenbereiche werden die beiden Lichtsignale so in den Überwachungsbereich ausgesandt, dass bei Auftreffen auf einer Kante eines der Lichtsignale von der Kante so abgeschirmt wird, dass keine Reflexion zum Empfänger erfolgt. Der Empfänger ist ausgebildet, das Ausbleiben des reflektierten Lichtsignals zu erkennen und gibt ein Kantenerfassungssignal aus, wenn lediglich ein reflektiertes Lichtsignal erfasst wird.

Aufgabe der Erfindung ist es, ein Verfahren und eine Vorrichtung der eingangs genannten Art zu schaffen, das bzw. die ungeachtet der Oberflächenbeschaffenheit der zu erfassenden Objekte bzw. der Objektausrichtung eine genaue Erfassung von Kantenbereichen ermöglicht.

Ausgehend von einem Verfahren der eingangs genannten Art wird der das Verfahren betreffende Teil der Aufgabe durch die Merkmale des Anspruchs 1 gelöst.

Eine erfindungsgemäß ausgebildete Vorrichtung umfaßt die Merkmale des Anspruchs 10.

Der Begriff Licht ist in der vorliegenden Anmeldung generell nicht als Beschränkung auf sichtbares Licht zu verstehen. Vielmehr soll unter dem Begriff Licht allgemein jede Art von optischer Strahlung, insbesondere jede Art von UV-Licht, IR-Licht und sichtbarem Licht zu verstehen sein. Entsprechend ist unter dem Begriff Reflexion in der vorliegenden Anmeldung generell sowohl gerichtete als auch ungerichtete Reflexion, d.h. Remission, zu verstehen.

Erfindungsgemäß werden durch Verwendung von mehreren Lichtsignalen klar unterscheidbare Strahlbilder auf der Empfangseinheit abgebildet, deren örtliche Beziehung zueinander, insbesondere deren Abstand, auf der Empfangseinheit eine genaue und deutliche Bestimmung von Höhenunterschieden von Objekten und insbesondere von Kantenbereichen von sich überlappenden Objekten zuläßt. Der Schwellenwert dient dabei der Unterscheidung zwischen der Erfassung etwaig auftretender Wölbungen oder "Wellen" im Objekt und der Erfassung einer tatsächlichen Kante.

Bei einer bevorzugten Ausführungsform des Verfahrens werden der Überwachungsbereich und die Objekte relativ zueinander bewegt und insbesondere werden die Objekte relativ zu dem örtlich fixierten Überwachungsbereich bewegt.

Je nach Aufgabenstellung ist es daher möglich, daß entweder die Objekte durch den Überwachungsbereich bewegt werden, oder alternativ dazu der Überwachungsbereich bzw. die optische Einheit mit der Empfangseinheit über die stillstehenden Objekte geführt wird, solange eine Relativbewegung zwischen den Objekten und dem Überwachungsbereich gewährleistet ist. Hierbei ist anzumerken, daß das Verfahren von der Geschwindigkeit der Relativbewegung grundsätzlich unabhängig ist.

Vorteilhafterweise werden die Lichtsignale in Form von Lichtstrahlen ausgesandt, wobei diese je nach Anwendung gepulst oder ungepulst sein können. Bei der Verwendung von gepulsten Lichtsignalen ist eine verbesserte Hintergrundlichtkompensation möglich.

Die Lichtsendeeinheit kann zum Aussenden der Lichtsignale wenigstens zwei getrennte Lichtsender aufweisen. Alternativ dazu ist es aber auch möglich, daß die Lichtsendeeinheit zum Aussenden der Lichtsignale einen einzelnen Lichtsender insbesondere in Verbindung mit einem Strahlteiler aufweist. Dabei hat die zuletzt genannte Variante den Vorteil, daß im Gegensatz zu einer Lichtsendeeinheit mit zwei getrennten Lichtsendern beispielsweise aufgrund einer Alterung der Lichtsender bei dieser Lichtsendeeinheit keine Kompensation eventuell auftretender unterschiedlicher Lichtintensitäten erfolgen muß, da hierbei das Licht immer von derselben Lichtquelle kommt und somit keine Differenz in der Lichtintensität der beiden Strahlen auftreten kann. Zudem weist diese Variante auch noch bauliche Vorteile, wie beispielsweise Platzersparnis auf.

Bei einer bevorzugten Ausgestaltung der Erfindung treffen die wenigstens zwei Lichtstrahlen auf der Oberfläche der Objekte voneinander in Bewegungsrichtung der Objekte beabstandet auf. Eine Kante bzw. ein Kantenbereich wird damit durch die zeitliche versetzte Auslenkung der reflektierten Lichtstrahlen sicher detektiert, die auftritt, wenn sich die Kante zwischen den beiden aufeinanderfolgenden Lichtstrahlen befindet. Damit ist das erfindungsgemäße Verfahren auch von der Ausrichtung der Objekte (z. B. schräg zueinander) im wesentlichen unabhängig.

Vorteilhafterweise ist der Abstand der ausgesandten Lichtstrahlen und insbesondere der Abstand der auf die Oberfläche der Objekte auftreffenden Lichtstrahlen änderbar.

Damit kann beispielsweise in einem Fall, wenn Ungleichmäßigkeiten in der Höhe des Objektes, wie Falten oder Wölbungen auftreten, der Abstand der beiden Lichtstrahlen so eingestellt werden, daß sie sehr eng zueinander in den Überwachungsbereich geführt sind, d.h. auf der Oberfläche des Objektes in sehr engem Abstand auftreffen. Dadurch, daß der nachfolgende Strahl dem vorausgehenden Strahl über eine solche Oberfläche in sehr engem Abstand folgt, wird zwar je nach Steigung der Wölbung oder Falte eine Verschiebung der beiden auf die Empfangseinheit auftreffenden Lichtstrahlen bewirkt, ihr Abstand zueinander bleibt jedoch im wesentlichen gleich. Durch eine solch enge Strahlführung ist es somit möglich, Unregelmäßigkeiten wie Wölbungen, Falten und dergleichen im Objekt im wesentlichen zu kompensieren.

Bei einer bevorzugten Ausführungsform ist die Querschnittsfläche wenigstens eines ausgesandten Lichtstrahls und insbesondere die jeweilige Projektionsfläche der auf der Oberfläche der Objekte auftreffenden Lichtstrahlen änderbar.

Das Verfahren kann somit durch die Einstellung der Projektionsfläche der Lichtstrahlen auf der Objektoberfläche je nach Aufgabenstellung an eine beliebige auftretende Kantenhöhe angepaßt werden. Beispielsweise wird bei Auftreten relativ kleiner und/oder sehr nah aufeinanderfolgender Kanten die Projektionsfläche der Lichtstrahlen auf den Objekten bezüglich der Kantenhöhe so verkleinert, daß auf der Empfangseinheit immer noch deutliche Abstandsänderungen der reflektierten Lichtstrahlen erfaßbar sind.

Vorteilhafterweise ist der Einfallswinkel wenigstens eines der in den Überwachungsbereich ausgesandten Lichtstrahlen änderbar. Dies bedeutet, daß zur Durchführung dieses Verfahren kein spezifischer Einfallswinkel für die Lichtsignale erforderlich ist, wodurch das Verfahren hinsichtlich der Signalverläufe zu den zu überwachenden Objekten problemlos an verschiedene bauliche Gegebenheiten in beispielsweise einer Transporteinrichtung angepaßt werden kann.

Nach einer bevorzugten Ausführungsform des erfindungsgemäßen Verfahrens werden die Lichtstrahlen parallel zueinander in den Überwachungsbereich ausgesandt. Es ist jedoch auch möglich, die Lichtstrahlen nicht parallel, sondern schräg zueinander in den Überwachungsbereich auszusenden, wobei in diesem Fall die Lichtstrahlen unter einem solchen Winkel zueinander in den Überwachungsbereich ausgesandt werden, daß durch Unterschiede im Bewegungsniveau der Objekte auftretende unterschiedliche Abbildungsmaßstäbe ausgeglichen werden. Dabei ist das Bewegungsniveau der Objekte beispielsweise durch die Höhe des Förderbandes festgelegt, die je nach Anwendung verschieden sein kann. Dadurch wird vermieden, daß sich der Abstand der Strahlbilder auf der Empfangseinheit bei sonst gleichen Bedingungen lediglich aufgrund der verschiedenen Bewegungsniveaus der Zeitungen ändert. Aufgrund dieser geometrischen Kompensation der Abbildungsmaßstäbe ist bei Anwendung des Verfahrens hinsichtlich des Abstandes der Strahlbilder auf der Empfangseinheit keine Anpassung vor Ort aufgrund beispielsweise unterschiedlicher Förderbandniveaus erforderlich, wodurch der Aufbauprozeß wesentlich vereinfacht wird. Durch diese geometrische Kompensation ist gewährleistet, daß die beiden Strahlbilder auf der Empfangseinheit ungeachtet von Niveauschwankungen der Objekte immer mit dem gleichen Abbildungsmaßstab auf der Empfangseinheit ausgebildet werden. Die Art und Weise dieser geometrischen Kompensation wird weiter unten anhand eines beschriebenen Ausführungsbeispiels erläutert.

Vorzugsweise werden die reflektierten Lichtstrahlen auf der Empfangseinheit scharf abgebildet. Dabei wird eventuell auftretende Streustrahlung infolge beispielsweise glänzender Oberflächen unterdrückt.

Bei einer besonders bevorzugten Ausführungsform werden die absoluten Positionen der Strahlbilder auf der Empfangseinheit bestimmt. Durch die Bestimmung dieser absoluten Positionen ist nun nicht mehr nur die Änderung des Abstandes zwischen den Strahlbilder auf der Empfangseinheit möglich, sondern auch die Bestimmung der tatsächlichen Positionswerte der einzelnen Strahlbilder.

Vorteilhafterweise werden unterhalb des vorbestimmten Schwellenwertes Änderungen der absoluten Positionen der Strahlbilder erfaßt und aus diesen eine Richtung eines Kantensprunges der sich insbesondere überlappenden Objekte bestimmt.

Solange der Schwellenwert, der die Erfassung einer Kante anzeigt, noch nicht erreicht ist, kann beispielsweise bei Auftreten beliebig schräger Flanken, wie dies bei überlappenden Zeitungen der Fall ist, eine Verschiebung der Strahlbilder auf der Empfangseinheit unter wesentlicher Beibehaltung ihres Abstandes zueinander entsprechend der Flankenneigung erfaßt werden. Aus dieser Information kann z.B. auf die Richtung eines Kantensprunges rückgeschlossen werden.

Vorteilhafterweise wird oberhalb des vorbestimmten Schwellenwerts aus den absoluten Positionen der Strahlbilder die Höhe der erfaßten Kante bestimmt.

Je nach Anwendungsfall kann die genaue Bestimmung des Wertes der Kantenhöhe von Bedeutung sein, wenn es beispielsweise gewünscht ist, zwischen Objekten mit unterschiedlich hohen Kantenbereichen zu unterscheiden bzw. die Detektion eines im Vergleich zu anderen zu hohen Objektes z.B. infolge zweier direkt übereinanderliegender Zeitungen zu ermöglichen, damit dies bei einer Zählung der Zeitungen berücksichtigt werden kann.

Bei einer bevorzugten Ausführungsform werden die erzeugten Kantenerfassungssignale gezählt und damit die Anzahl der erfaßten Kantenbereiche ermittelt. Dazu ist die Auswerteeinheit mit einer Zählvorrichtung zum Zählen der von der Auswerteeinheit erzeugten Kantenerfassungssignale verbunden.

Bei einer besonders bevorzugten Ausführungsform der Erfindung ist die Empfangseinheit, die optische Einheit und eine durch die sich durch den Überwachungsbereiche bewegenden Objekte definierte Hauptreflexionsebene gemäß der Scheimpflug-Bedingung zueinander angeordnet, d. h. daß sich die durch die Empfangseinheit definierte Bildebene, die durch die optische Einheit definierte Objektivebene und die die Objektebene definierende Hauptreflexionsebene in einer Linie schneiden. Durch eine derartige Anordung ist gewährleistet, daß im Falle der flankenartigen Steigung der Hauptreflexionsebene der sich überlappenden Zeitungen die Strahlbilder auf der Empfangseinheit immer mit der gleichen Schärfentiefe abgebildet werden.

Weitere Ausführungsformen der Erfindung sind in den Unteransprüchen, der Beschreibung sowie der Zeichnung angegeben.

Die Erfindung nachfolgend anhand von Ausführungsbeispielen unter Bezugnahme auf die Zeichnungen näher beschrieben; in diesen zeigen:
- Fig. 1: eine schematische Darstellung einer erfindungsgemäß ausgebildeten Vorrichtung mit sich durch den Überwachungsbereich bewegenden Zeitungen,
- Fig. 1a: eine Draufsicht auf eine Empfangseinheit mit darauf abgebildeten fokussierten Strahlbildern,
- Fig. 2: die Vorrichtung gemäß Fig. 1 mit gegenüber Fig. 1 weiterbewegten Zeitungen,
- Fig. 2a: die Draufsicht auf die Empfangseinheit mit entsprechend verschobenen Strahlbildern und
- Fig. 3: die Vorrichtung gemäß Fig. 1 mit gegenüber den Fig. 1 und 2 geänderten Strahlverläufen der in den Überwachungsbereich ausgesandten Lichtstrahlen.

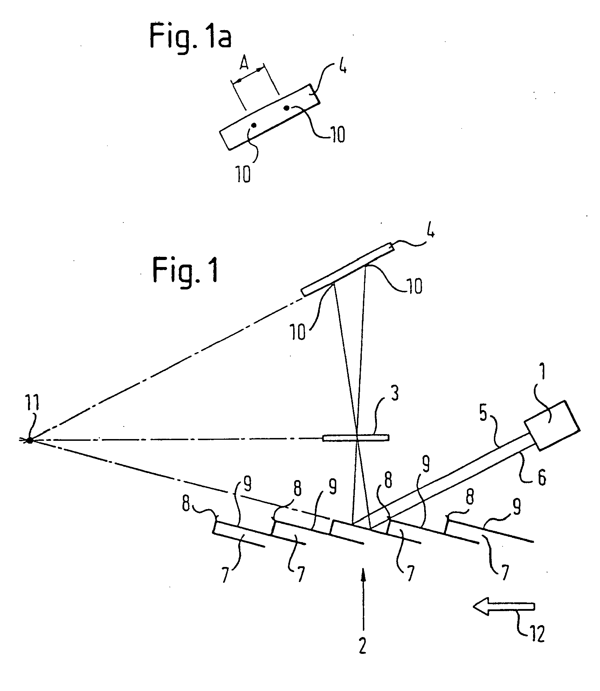

Die in Fig. 1 dargestellte Vorrichtung umfaßt eine Lichtsendeeinheit 1, einen Überwachungsbereich 2, durch den sich mehrere überlappend angeordnete Zeitungen 7 in Richtung eines Pfeils 12 bewegen, eine optische Einheit 3 und eine Empfangseinheit 4.

Die Lichtsendeeinheit 1 besteht aus einem Lichtsender (nicht gezeigt) sowie einem Strahlteiler (nicht gezeigt). Die Verwendung des Lichtsenders in Verbindung mit dem Strahlteiler hat zum Vorteil, daß bei Schwächung der Lichtintensität des Lichtsenders beispielsweise infolge von Alterung die beiden Lichtstrahlen immer die gleiche Lichtintensität beibehalten.

Wie in Fig. 1 gezeigt ist, sendet die Lichtsendeeinheit 1 zwei parallele Lichtstrahlen 5, 6 in den Überwachungsbereich 2 aus, die auf der Oberfläche der Zeitungen 7 voneinander in Bewegungsrichtung der Zeitungen 7 beabstandet auftreffen. Es könnten jedoch auch mehr als zwei Lichtstrahlen verwendet werden.

Durch die Überlappung der Zeitungen 7 sind Kantenbereiche 8 sowie schräge Flankenbereiche 9 ausgebildet, wobei die letzteren zugleich die Hauptreflexionsebene für die Lichtstrahlen 5, 6 definieren.

Die Lichtstrahlen 5, 6 werden an der Oberfläche der Zeitung 7 reflektiert und über eine optische Einheit 3 auf einen Empfänger 4 als Strahlbilder 10 abgebildet.

Die optische Einheit 3 kann verschiedene optische Elemente, wie beispielsweise Linsen umfassen, um die reflektierten Lichtstrahlen auf die Empfangseinheit 4 scharf abzubilden. Eventuell auftretende Streustrahlung, die beispielsweise in Zusammenhang mit einer glänzenden Oberfläche der Zeitungen 7 auftreten kann, wird dabei unterdrückt.

Die Empfangseinheit 4, die optische Einheit 3 und die durch die Flankenbereiche 9 der Zeitungen 7 definierte Hauptreflexionsebene sind gemäß der Scheimpflug-Bedingung zueinander angeordnet, d. h. es schneiden sich die durch die Empfangseinheit definierte Bildebene, die durch die optische Einheit 3 definierte Objektivebene und die die Objektebene definierende Hauptreflexionsebene in einer Linie, die in Fig. 1 senkrecht zur Bildebene steht und somit als Punkt 11 dargestellt ist.

Wie weiter in Fig. 1 gezeigt ist, treffen die beiden parallelen Strahlen 5, 6 nach ihrer Aussendung von der Lichtsendeeinheit 1 auf den Flankenbereich 9 einer Zeitung 7 auf, werden dort reflektiert und von der optischen Einheit 3 auf die Empfangseinheit 4 fokussiert. Dabei werden auf der Empfangseinheit 4 Strahlbilder 10 abgebildet, die um eine Abstand A voneinander beabstandet sind, wie in Fig. 1a gezeigt ist. Aufgrund der Bewegung der Zeitungen 7 im Überwachungsbereich 2 treffen die Lichtstrahlen 5, 6 an unterschiedlichen Punkten auf der Oberfläche der Zeitungen 7 auf. Dies hat eine Änderung des Strahlverlaufes der beiden Lichtstrahlen 5, 6 zueinander zur Folge. Die Strahlbilder 10 verschieben sich dabei aufgrund des abfallenden Flankenbereiches 9 auf der Empfangseinheit 4 (in diesem Falle nach rechts in der Fig. 1), ihr Abstand bleibt jedoch gleich. Aus der Richtung und der Größe der Verschiebung der Strahlbilder 10 auf der Empfangseinheit 4 kann in einer Auswerteeinheit auf eine Steigung des Flankenbereiches und damit auf die Richtung eines Kantensprungs rückgeschlossen werden.

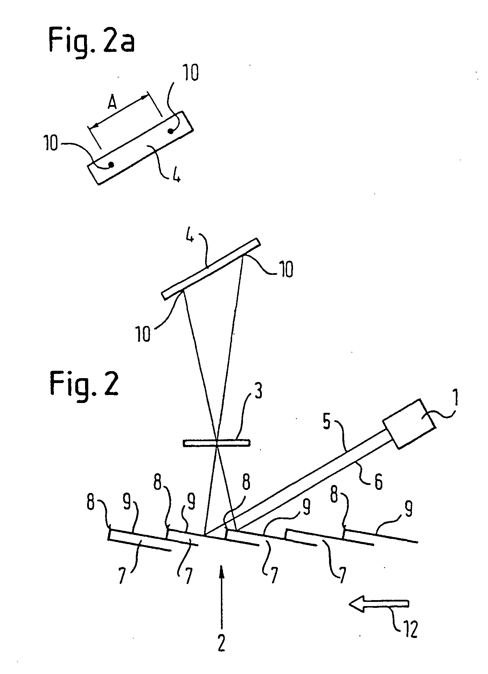

Wandert nun, wie in Fig. 2 gezeigt ist, ein an einer Überlappungsstelle der Zeitungen 7 gebildeter Kantenbereich 8 zwischen die Lichtstrahlen 5 und 6, ändert sich zunächst der Strahlverlauf des Lichtstrahls 6 sprunghaft. Dabei ändert sich auch die Position des dem Lichtstrahl 5 zugeordneten Strahlbildes 10 auf der Empfangseinheit 4 sprunghaft, wodurch sich ein neuer Abstand A' ergibt, wie in Fig. 2a gezeigt ist. Diese Abstandsänderung der Strahlbilder 10 auf der Empfangseinheit 4 zeigt einen Kantenbereich 8 an. Dabei wird in der Auswerteeinheit (nicht gezeigt) bei Überschreiten eines vorbestimmten Schwellenwertes ein Kantenerfassungssignal erzeugt, das einer Zähleinrichtung (nicht gezeigt) zugeführt wird. Aus der Bestimmung der absoluten Positionen der Strahlbilder 10 auf der Empfangseinheit 4 zu diesem Zeitpunkt kann in der Auswerteeinheit (nicht gezeigt) auch noch die absolute Höhe der detektierten Kante 8 bestimmt werden.

Bei einer Weiterbewegung der Zeitungen 7 in Richtung des Pfeils 12 ändert sich bei Auftreffen des Lichtstrahls 5 auf die Kante 8 auch der Strahlverlauf des Lichtstrahls 5 entsprechend, so daß die Strahlbilder 10 wieder ihren ursprünglichen Abstand A zueinander besitzen.

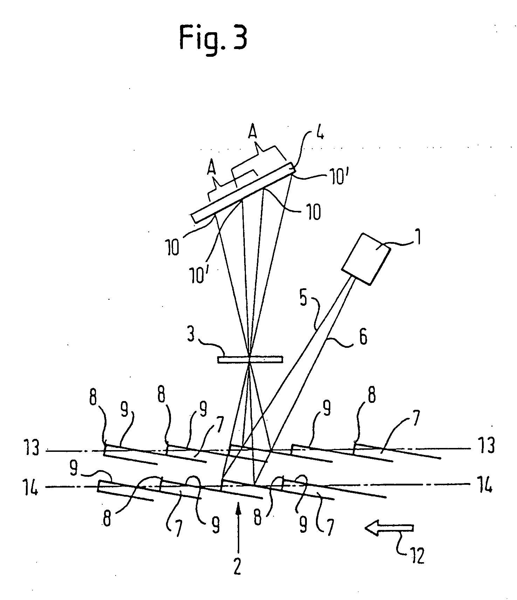

In Fig. 3 ist die gleiche Anordnung wie in den Fig. 1 und 2 gezeigt, jedoch mit der Ausnahme, daß hier die beiden Lichtstrahlen 5, 6 nicht parallel in den Überwachungsbereich 2 ausgesandt werden. Die Strahlführung der beiden Lichtstrahlen 5, 6 ist hierbei so gewählt, daß beide Lichtstrahlen 5, 6 unabhängig von einem Bewegungsniveau 13, 14 der Zeitungen 7 in bezug auf die Position der Empfangseinheit 4 mit dem gleichen Abbildungsmaßstab auf der Empfangseinheit 4 abgebildet werden, wobei das Bewegungsniveau 13, 14 der Zeitungen 7 beispielsweise durch die unterschiedliche Transporthöhe verschiedener Förderbänder bedingt ist.

Diese Strahlführung ist in Fig. 3 für zwei verschiedene Bewegungsniveaus 13, 14 der Zeitungen 7 gezeigt. Mit Bezugszeichen 13 ist ein erstes Bewegungsniveau für die Zeitungen 7 gezeigt, das beispielsweise durch eine Förderbandhöhe eines ersten Förderbandes bestimmt ist. Dabei treffen die Lichtstrahlen 5, 6 in Strahlwegen ähnlich der ersten Ausführungsform auf die Zeitungen 7 auf und werden in Richtung der Empfangseinheit 4 reflektiert.

Wird dieselbe Vorrichtung nun aber mit einem Förderband verwendet, das ein im Vergleich zum ersten Förderband niedrigeres Bewegungsniveau 14 aufweist, verlaufen nun die Lichtstrahlen 5, 6 in einer Verlängerung der bei der ersten Förderbandhöhe ausgebildeten Strahlwege in Richtung der Zeitungen 7, werden von diesen reflektiert und durch die optische Einheit 3 auf die Empfangseinheit 4 als Strahlbilder 10' fokussiert. Dabei ändert sich zwar die absolute Position der beiden Strahlbilder 10' auf der Empfangseinheit 4, der Abstand A zwischen den Strahlbildern 10 und 10 bleibt jedoch aufgrund des gewählten Winkel zwischen den Lichtstrahlen 5 und 6 und der damit verbundenen Kompensation des Abbildungsmaßstabes gleich.

Durch diese Vorgehensweise ist es auf einfache Art möglich, unterschiedliche Bewegungsniveaus der Zeitungen 7 geometrisch zu kompensieren, so daß die Strahlbilder unabhängig von dem Bewegungsniveau der Zeitungen 7 immer mit gleichem Abstand A auf der Empfangseinheit 4 auftreffen. Die Detektion der Kante 8 erfolgt auf die gleiche Weise wie bei der vorhergehenden Ausführungsform.

### Bezugszeichenliste:

- 1: Lichtsendeeinheit
- 2: Überwachungsbereich
- 3: optische Einheit
- 4: Empfangseinheit
- 5: Lichtstrahl
- 6: Lichtstrahl
- 7: Zeitungen
- 8: Kantenbereich
- 9: Flankenbereich
- 10: Strahlbilder
- 10: Strahlbilder
- 11: Schnittlinie (Scheimpflug)
- 12: Pfeil
- 13: Bewegungsniveau
- 14: Bewegungsniveau

## Patentansprüche

1. Verfahren ausgebildet zur Erfassung von Kantenbereichen von in einem Überwachungsbereich angeordneten und sich relativ zu diesem Überwachungsbereich bewegenden Objekten, insbesondere von sich überlappenden Zeitungen, bei dem
wenigstens zwei Lichtsignale (5, 6) in den Überwachungsbereich (2) ausgesandt werden und
die ausgesandten Lichtsignale (5, 6) von einem der in dem Überwachungsbereich (2) angeordneten und sich relativ zum Überwachungsbereich (2) bewegenden Objekte (7) reflektiert werden,
**dadurch gekennzeichnet,**
**dass** zumindest ein Teil der reflektierten Lichtsignale (5, 6) als beabstandete Strahlbilder (10) auf eine ortsauflösende Empfangseinheit (4) abgebildet werden,
der Abstand A zwischen den Strahlbildern (10) auf der ortsauflösenden Empfangseinheit (4) erfasst wird,
und bei Erfassung einer Abstandsänderung der Strahlbilder (10) um wenigstens einen vorbestimmten Schwellenwert ein Kantenerfassungssignal erzeugt wird.

2. Verfahren nach Anspruch 1,
**dadurch gekennzeichnet,**
**daß** die Lichtsignale (5, 6) in Form von Lichtstrahlen (5, 6) ausgesandt werden, wobei insbesondere die Lichtstrahlen (5, 6) auf der Oberfläche der Objekte (7) voneinander in Bewegungsrichtung der Objekte (7) beabstandet auftreffen.

3. Verfahren nach Anspruch 2,
**dadurch gekennzeichnet,**
**daß** der Abstand der ausgesandten Lichtstrahlen (5, 6) und insbesondere der Abstand der auf die Oberfläche der Objekte (7) auftreffenden Lichtstrahlen (5, 6) änderbar ist und/oder daß die Querschnittsfläche wenigstens eines ausgesandten Lichtstrahls (5, 6) und insbesondere die jeweilige Projektionsfläche der auf der Oberfläche der Objekte (7) auftreffenden Lichtstrahlen (5, 6) änderbar ist
und/oder daß der Einfallswinkel wenigstens eines der in den Überwachungsbereich (2) ausgesandten Lichtstrahlen (5, 6) änderbar ist.

4. Verfahren nach Anspruch 2 oder 3,
**dadurch gekennzeichnet,**
**daß** die Lichtstrahlen (5, 6) parallel zueinander in den Überwachungsbereich (2) ausgesandt werden oder
**daß** die Lichtstrahlen (5, 6) nicht parallel zueinander in den Überwachungsbereich (2) ausgesandt werden, insbesondere daß die Lichtstrahlen (5, 6) unter einem solchen Winkel zueinander in den Überwachungsbereich (2) ausgesandt werden, daß durch Unterschiede im Bewegungsniveau (13, 14) der Objekte (7) auftretende unterschiedliche Abbildungsmaßstäbe ausgeglichen werden.

5. Verfahren nach einem der Ansprüche 2 bis 4,
**dadurch gekennzeichnet,**
**daß** die reflektierten Lichtstrahlen (5, 6) auf der Empfangseinheit (4) scharf abgebildet werden.

6. Verfahren nach einem der vorhergehenden Ansprüche,
**dadurch gekennzeichnet,**
**daß** die absoluten Positionen der Strahlbilder (10) auf der Empfangseinheit (4) bestimmt werden.

7. Verfahren nach Anspruch 6,
**dadurch gekennzeichnet,**
**daß** unterhalb des vorbestimmten Schwellenwertes Änderungen der absoluten Positionen der Strahlbilder (10) erfaßt und aus diesen eine Richtung eines Kantensprunges der Objekte (7) bestimmt wird.

8. Verfahren nach Anspruch 6,
**dadurch gekennzeichnet,**
**daß** oberhalb eines vorbestimmten Schwellenwerts aus den absoluten Positionen der Strahlbilder (10) eine Höhe der erfaßten Kante (8) bestimmt wird.

9. Verfahren nach einem der vorhergehenden Ansprüche,
**dadurch gekennzeichnet,**
**daß** die erzeugten Kantenerfassungssignale gezählt werden und damit die Anzahl der erfaßten Kantenbereiche ermittelt wird und/oder daß der Überwachungsbereich (2) und die Objekte (7) relativ zueinander bewegt werden und insbesondere die Objekte (7) relativ zu dem örtlich fixierten Überwachungsbereich (2) bewegt werden.

10. Vorrichtung ausgebildet zur Erfassung von Kantenbereichen von in einem Überwachungsbereich (2) angeordneten und sich relativ zu diesem Überwachungsbereich (2) bewegenden Objekten, insbesondere von sich überlappenden Zeitungen, mit einer Lichtsendeeinheit (1) zum Aussenden von Lichtsignalen (5, 6) in den Überwachungsbereich (2) und mit einer Empfangseinheit (4) zum Empfangen der an einem der in dem im Überwachungsbereich (2) angeordneten und sich relativ zu diesem Überwachungsbereich (2) bewegenden Objekte (7) reflektierten Lichtsignale (5, 6), wobei die Lichtsendeeinheit (1) zum Aussenden von wenigstens zwei Lichtsignalen (5, 6) in den Überwachungsbereich (2) ausgebildet ist, insbesondere zur Durchführung des Verfahrens nach einem der vorhergehenden Ansprüche,
**dadurch gekennzeichnet,**
**dass** die Empfangseinheit (4) als ortsauflösende Empfangseinheit (4) ausgebildet ist,
**dass** im Strahlengang zwischen dem Überwachungsbereich (2) und der ortsauflösenden Empfangseinheit (4) eine optische Einheit (3) vorgesehen ist, durch die zumindest ein Teil der reflektierten Lichtsignale (5, 6) auf der ortsauflösenden Empfangseinheit (4) als beabstandete Strahlbilder (10) abbildbar sind, und
**dass** eine Auswerteeinheit zur Erfassung des Abstandes A zwischen den Strahlbildern (10) auf der ortsauflösenden Empfangseinheit (4) vorgesehen ist, wobei durch die Auswerteeinheit bei Erfassen einer Abstandsänderung der Strahlbilder (10) um mindestens einen vorgegebenen Schwellenwert ein Kantenerfassungssignal erzeugbar ist.

11. Vorrichtung nach Anspruch 10,
**dadurch gekennzeichnet,**
**daß** die Lichtsendeeinheit (1) zum Aussenden der Lichtsignale (5, 6) in Form von Lichtstrahlen (5, 6) ausgebildet ist.

12. Vorrichtung nach Anspruch 10 oder 11,
**dadurch gekennzeichnet,**
**daß** die Lichtsendeeinheit (1) zum Aussenden der Lichtsignale (5, 6) wenigstens zwei getrennte Lichtsender aufweist oder
**daß** die Lichtsendeeinheit (1) zum Aussenden der Lichtsignale (5, 6) einen einzelnen Lichtsender insbesondere in Verbindung mit einem Strahlteiler aufweist.

13. Vorrichtung nach einem der Ansprüche 10 bis 12,
**dadurch gekennzeichnet,**
**daß** die Empfangseinheit (4), die optische Einheit (3) und die durch die sich durch den Überwachungsbereich (2) bewegenden Objekte (7) definierte Hauptreflexionsebene gemäß der Scheimpflug-Bedingung zueinander angeordnet sind, d. h. daß sich die durch die Empfangseinheit (4) definierte Bildebene, die durch die optische Einheit (3) definierte Objektivebene und die die Objektebene definierende Hauptreflexionsebene in einer Linie (11) schneiden, und/oder daß die Auswerteeinheit mit einer Zählvorrichtung zum Zählen der von der Auswerteeinheit erzeugten Kantenerfassungssignale verbunden ist.

## Claims

1. A method configured for detecting edge regions of objects, in particular of overlapping newspapers, arranged in a monitored zone and moving relative to this monitored zone, wherein
at least two light signals (5, 6) are transmitted into the monitored zone (2); and
the transmitted light signals (5, 6) are reflected by one of the objects (7) arranged in the monitored zone (2) and moving relative to the monitored zone (2),
**characterised in that**
at least some of the reflected light signals (5, 6) are imaged as spaced apart beam images (10) on a spatially resolving reception unit (4);
the spacing A between the beam images (10) is detected on the spatially resolving reception unit (4);
and an edge detection signal is generated on detection of a spacing change of the beam images (10) by at least one predefined threshold value.

2. A method in accordance with claim 1,
**characterised in that**
the light signals (5, 6) are transmitted in the form of light beams (5, 6), with the light beams (5, 6) in particular being incident on the surface of the objects (7) spaced apart from one another in the direction of movement of the objects (7).

3. A method in accordance with claim 2,
**characterised in that**
the spacing of the transmitted light beams (5, 6) and in particular the spacing of the light beams (5, 6) incident on the surface of the objects (7) is variable; and/or
**in that** the cross-sectional surface of at least one transmitted light beam (5, 6) and in particular the respective projection surface of the light beams (5, 6) incident on the surface of the objects (7) is variable;
and/or **in that** the angle of incidence of at least one of the light beams (5, 6) transmitted into the monitored zone (2) is variable.

4. A method in accordance with claim 2 or claim 3,
**characterised in that**
the light beams (5, 6) are transmitted into the monitored zone (2) in parallel with one another; or
**in that** the light beams (5, 6) are transmitted into the monitored zone (2), but not in parallel with one another; in particular **in that** the light beams (5, 6) are transmitted into the monitored zone (2) at such an angle to one another that different imaging scales occurring due to differences in the movement level (13, 14) of the objects (7) are compensated.

5. A method in accordance with any one of the claims 2 to 4,
**characterised in that**
the reflected light beams (5, 6) are imaged in focus on the reception unit (4).

6. A method in accordance with any one of the preceding claims,
**characterised in that**
the absolute positions of the beam images (10) on the reception unit (4) are determined.

7. A method in accordance with claim 6,
**characterised in that**
variations in the absolute positions of the beam images (10) beneath the predefined threshold value are detected and a direction of an edge jump of the objects (7) is determined therefrom.

8. A method in accordance with claim 6,
**characterised in that**
a height of the detected edge (8) is determined from the absolute positions of the beam images (10) above a predefined threshold.

9. A method in accordance with any one of the preceding claims,
**characterised in that**
the generated edge detection signals are counted and thus the number of detected edge regions is determined; and/or **in that** the monitored zone (2) and the objects (7) are moved relative to one another and the objects (7) are in particular moved relative to the spatially fixed monitored zone (2).

10. An apparatus configured for detecting edge regions of objects, in particular of overlapping newspapers, arranged in a monitored zone (2) and moving relative to this monitored zone (2) having a light transmission unit (1) for transmitting light signals (5, 6) into the monitored zone (2) and having a reception unit (4) for receiving the light signals (5, 6) reflected at one of the objects (7) arranged in the monitored zone (2) and moving relative to this monitored zone (2), wherein the light transmission unit (1) is configured for transmitting at least two light signals (5, 6) into the monitored zone (2), in particular for carrying out the method in accordance with any one of the preceding claims,
**characterised in that**
the reception unit (4) is configured as a spatially resolving reception unit (4);
**in that** an optical unit (3) is provided in the beam path between the monitored zone (2) and the spatially resolved reception unit (4) and at least some of the reflected light signals (5, 6) can be imaged by said optical unit as spaced apart beam images (10) on the spatially resolving reception unit (4); and
**in that** an evaluation unit is provided for detecting the spacing A between the beam images (10) on the spatially resolving reception unit (4), with an edge detection signal being able to be generated by the evaluation unit on detection of a spacing change of the beam images (10) by at least one predefined threshold value.

11. An apparatus in accordance with claim 10,
**characterised in that**
the light transmission unit (1) is configured for transmitting the light signals (5, 6) in the form of light beams (5, 6).

12. An apparatus in accordance with claim 10 or claim 11,
**characterised in that**
the light transmission unit (1) has at least two separate light transmitters for transmitting the light signals (5, 6); or
**in that** the light transmission unit (1) has a single light transmitter, in particular in conjunction with a beam splitter, for transmitting the light signals (5, 6).

13. An apparatus in accordance with any one of the claims 10 to 12,
**characterised in that**
the reception unit (4), the optical unit (3) and the main reflection plane defined by the objects (7) moving through the monitored zone (2) are mutually arranged in accordance with the Scheimpflug condition, i.e. **in that** the image plane defined by the reception unit (4), the object plane defined by the optical unit (3) and the main reflection plane defining the object plane intersect in a line (11); and/or **in that** the evaluation unit is connected to a counting apparatus for counting the edge detection signals generated by the evaluation unit.

## Revendications

1. Procédé conçu pour la détection de zones d'arêtes sur des objets agencés dans une zone de surveillance et en déplacement par rapport à cette zone de surveillance, en particulier de journaux en chevauchement, dans lequel
on émet au moins deux signaux lumineux (5, 6) vers la zone de surveillance (2), et
les signaux lumineux émis (5, 6) sont réfléchis par l'un des objets (7) agencés dans la zone de surveillance (2) et en déplacement par rapport à la zone de surveillance (2),
**caractérisé en ce que**
au moins une partie des signaux lumineux réfléchis (5, 6) sont mis sous la forme d'images comme des images de rayonnement écartées (10) sur une unité réceptrice (4) à résolution locale,
la distance (A) entre les images de rayonnement (10) sur l'unité réceptrice (4) à résolution locale est détectée,
et lors de la détection d'une modification de distance des images de rayonnement (10) d'au moins une valeur seuil prédéterminée, on engendre un signal de détection d'arête.

2. Procédé selon la revendication 1,
**caractérisé en ce que** les signaux lumineux (5, 6) sont émis sous la forme de rayons lumineux, de sorte qu'en particulier les rayons lumineux (5, 6) tombent sur la surface des objets (7) à distance les uns des autres en direction de déplacement des objets (7).

3. Procédé selon la revendication 2,
**caractérisé en ce que** la distance des rayons lumineux émis (5, 6) et en particulier la distance des rayons lumineux (5, 6) tombant sur la surface des objets (7) est modifiable, et/ou
**en ce que** la surface de section transversale d'au moins un rayon lumineux émis (5, 6) et en particulier la surface de projection respective des rayons lumineux (5, 6) tombant sur la surface des objets (7) est modifiable,
et/ou **en ce que** l'angle d'incidence d'au moins un des rayons lumineux (5, 6) émis vers la zone de surveillance (2) est modifiable.

4. Procédé selon la revendication 2 ou 3,
**caractérisé en ce que** les rayons lumineux (5, 6) sont émis parallèlement les uns aux autres vers la zone de surveillance (2), ou bien
**en ce que** les rayons lumineux (5, 6) ne sont pas émis parallèlement les uns aux autres vers la zone de surveillance (2), et en particulier **en ce que** les rayons lumineux (5, 6) sont émis vers la zone de surveillance (2) avec un angle tel les uns par rapport aux autres que l'on compense des échelles d'imagerie différentes provoquées par des différences dans le niveau de déplacement (13, 14) des objets (7).

5. Procédé selon l'une des revendications 2 à 4,
**caractérisé en ce que** les rayons lumineux réfléchis (5, 6) sont sous la forme d'images nettes sur l'unité réceptrice (4).

6. Procédé selon l'une des revendications précédentes,
**caractérisé en ce que** l'on détermine les positions absolues des images de rayonnement (10) sur l'unité réceptrice (4).

7. Procédé selon la revendication 6,
**caractérisé en ce que**, au-dessous de la valeur seuil prédéterminée, on détecte des modifications des positions absolues des images de rayonnement (10), et on détermine à partir de ces modifications une direction d'un saut d'arête des objets (7).

8. Procédé selon la revendication 6,
**caractérisé en ce que**, au-dessus d'une valeur seuil prédéterminée, on détermine à partir des positions absolues des images de rayonnement (10) une hauteur de l'arête détectée (8).

9. Procédé selon l'une des revendications précédentes,
**caractérisé en ce que** les signaux de détection de l'arête engendrés sont comptés et l'on détermine ainsi le nombre des zones d'arêtes détectées, et/ou
**en ce que** la zone de surveillance (2) et les objets (7) sont déplacés l'une par rapport aux autres, et en particulier les objets (7) sont déplacés par rapport à la zone de surveillance (2) fixée de manière locale.

10. Dispositif conçu pour la détection de zones d'arêtes sur des objets agencés dans une zone de surveillance (2) et en déplacement par rapport à cette zone de surveillance (2), en particulier de journaux en chevauchement, comprenant une unité émettrice de lumière (1) pour émettre des signaux lumineux (5, 6) vers la zone de surveillance (2), et comprenant une unité réceptrice (4) pour recevoir les signaux lumineux (5, 6) réfléchis sur l'un des objets (7) agencés dans la zone de surveillance (2) et en déplacement par rapport à la zone de surveillance (2), dans lequel l'unité émettrice de lumière (1) est réalisée pour émettre au moins deux signaux lumineux (5, 6) vers la zone de surveillance (2), en particulier pour la mise en oeuvre du procédé selon l'une des revendications précédentes,
**caractérisé en ce que**
l'unité réceptrice (4) est réalisée sous la forme d'une unité réceptrice (4) à résolution locale,
**en ce qu'**il est prévu, dans le trajet du rayonnement entre la zone de surveillance (2) et l'unité réceptrice (4) à résolution locale, une unité optique (3) au moyen de laquelle au moins une partie des signaux lumineux réfléchis (5, 6) sont susceptibles d'être mis sous la forme d'images comme des images de rayonnement écartées (10) sur l'unité réceptrice (4) à résolution locale, et
**en ce qu'**il est prévu une unité d'évaluation pour détecter la distance (A) entre les images de rayonnement (10) sur l'unité réceptrice (4) à résolution locale, et lors de la détection d'une modification de distance des images de rayonnement (10) d'au moins une valeur seuil prédéterminée, un signal de détection d'arête est susceptible d'être engendré au moyen de l'unité d'évaluation.

11. Dispositif selon la revendication 10,
**caractérisé en ce que** l'unité émettrice de lumière (1) est réalisée pour émettre les signaux lumineux (5, 6) sous la forme de rayons lumineux (5, 6).

12. Dispositif selon la revendication 10 ou 11,
**caractérisé en ce que** l'unité émettrice de lumière (1) comprend au moins deux émetteurs de lumière séparés pour émettre les signaux lumineux (5, 6), ou bien
**en ce que** l'unité émettrice de lumière comprend un unique émetteur de lumière pour émettre des signaux lumineux (5, 6), en particulier en association avec un diviseur de rayonnement.

13. Dispositif selon l'une des revendications 10 à 12,
**caractérisé en ce que** l'unité réceptrice (4), l'unité optique (3), et le plan de réflexion principal défini par les objets (7) qui se déplacent à travers la zone de surveillance (2) sont agencés les uns par rapport aux autres selon la loi de "Scheimpflug", c'est-à-dire que le plan image défini par l'unité réceptrice (4), le plan objectif défini par l'unité optique (3) et le plan de réflexion principal définissant le plan objets se recoupent en une ligne (11), et/ou **en ce que** l'unité d'évaluation est reliée à un dispositif de comptage pour compter les signaux de détection d'arêtes engendrés par l'unité d'évaluation.
